# EUROPÄISCHE PATENTSCHRIFT

(11) **EP 1 342 943 B1**
(45) Veröffentlichungstag und Bekanntmachung des Hinweises auf die Patenterteilung: **05.10.2005**
(21) Anmeldenummer: 03004597.5
(22) Anmeldetag: 01.03.2003
(51) Int. Cl.: F16K 51/00

(54) **Rohrleitungsarmatur mit Tragegriff**
Piping armature with carrying handle
Vanne de canalisation avec poignée de transport

(30) Priorität: 05.03.2002 DE 10209452
(43) Veröffentlichungstag der Anmeldung: 10.09.2003
(73) Patentinhaber: Kern, Egon, 63820 Elsenfeld (DE); Worm, Helmut, 65366 Geisenheim (DE); Orschler, Thomas, 63741 Aschaffenburg (DE)
(72) Erfinder: Kern, Egon, 63820 Elsenfeld (DE); Worm, Helmut, 65366 Geisenheim (DE); Orschler, Thomas, 63741 Aschaffenburg (DE)
(74) Vertreter: Pöhner, Wilfried Anton, Dr.

(56) Entgegenhaltungen:
- EP-A- 0 078 933
- DE-A- 3 912 409
- DE-U- 29 701 094
- GB-A- 1 096 097
- US-A- 4 285 537
- US-A- 5 755 057

## Beschreibung

Die Erfindung betrifft eine Rohrleitungsarmatur, mit einem Gehäuse und Armatur-Komponenten, die mit Hilfe von schraubbaren Befestigungsmitteln am Gehäuse befestigt sind, wobei als Armatur-Komponente ein Mittel zum Tragen der Rohrleitungsarmatur vorgesehen ist, das an wenigstens zwei am Gehäuse befestigten Lagern bleibend festgelegt ist, wobei die Festlegungspunkte oberhalb des Schwerpunktes der Armatur liegen.

Unter Armaturen versteht man im allgemeinen Zubehörteile, wie Meßgeräte, Ventile, oder Schmiervorrichtungen, die einen geregelten Betrieb von Maschinen oder Apparaten gewährleisten sollen. In einem engeren Sinn werden mit Armaturen Organe zur Steuerung von Wasser-, Gas- oder Ölströmen bezeichnet. Vorliegende Erfindung bezieht sich auf Armaturen in letzterem Sinn.

Nach dem Stand der Technik sind unterschiedliche Ausführungen von Armaturen der genannten Art bekannt. Zu diesen Geräten gehören unter anderem Absperrschieber, Ventile, Hydranten oder Hähne, die bei vergleichsweise kleinen Betriebsdrücken und Abmessungen häufig aus Kunststoff, bei größeren Betriebsdrücken und Abmessungen in der Regel aus Stahl oder Gußeisen gefertigt sind. Mittelgroße oder größere Armaturen weisen daher aufgrund ihrer Größe und ihres Materials jeweils ein hohes Gewichte auf.

Beim Transport, Lagerumschlag und Ein- und Ausbau derartiger Armaturen, die ein Aufheben, Absenken und Ausrichten der Armatur einschließen, erweist sich dieses Gewicht als sehr nachteilig. Die in der Regel manuell durchgeführten Arbeitsschritte erfordern einen erheblichen Kraftaufwand und führen in nachteiliger Weise zu einer hohen körperlichen Belastung. Insbesondere werden bei diesen Arbeiten Wirbelsäule, Bandscheiben und Gelenke beansprucht und häufig überbeansprucht, so daß gesundheitliche Schäden die Folge sind.

Die JP 2000281273 beschreibt eine Armatur mit jeweils zwei ösenartigen Halterungen, die mit dem Unterteil eines zweiteiligen Messgerätes verbunden sind, wobei das Messgerät wiederum mit einem Rohrleitungsabschnitt verbunden ist. An den Öffnungen der ösenartigen Halterungen bzw. an den in den Öffnungen der Halterungen anliegenden Ringen ist henkelartig ein Mittel zum Tragen der Vorrichtung befestigt. Das Mittel zum Tragen der Armatur besteht aus einem Seil, das durch Ringe schwenkbar mit ösenartigen Halterungen verbunden ist. Alternativ ist als Mittel zum Tragen ein starrer und nicht schwenkbarer Henkel vorgesehen, der mit der oberen Hälfte des Messgerätes verbunden ist.

Vor diesem Hintergrund hat sich die Erfindung die Aufgabe gestellt, Armaturen dahingehend weiterzubilden, daß die bei Transport und/oder Montage auftretenden Nachteile vermieden werden.

Erfindungsgemäß wird diese Aufgabe dadurch gelöst, daß
- das genannte Mittel (2) einen U-förmigen, starr ausgebildeten Tragegriff (2) umfaßt, dessen Schenkelenden (2a, 2b)
   - jeweils an genannten Lagern (3a, 3b) angelenkt sind, und
   - um eine durch die Anlenkpunkte (6a, 6b) laufende Achse (7) schwenkbar ausgebildet sind, wobei
      - die Achse (7) in Achsrichtung des Rohres verläuft.

Die Erfindung geht von an sich bekannten Armaturen aus mit einem Gehäuse und ggf. weiteren Komponenten, die mittels Schrauben am Gehäuse befestigt sind. In Abweichung zum Stand der Technik sind die Armaturen gemäß Vorschlag jedoch mit einem Mittel ausgestattet, das ein Tragen der Armatur ermöglicht und an geeignet ausgebildeten Lagern des Gehäuses festgelegt ist. Dabei sind die Festlegungspunkte oberhalb des Schwerpunktes angeordnet, so daß die Armatur an genanntem Mittel hängend aufgenommen, transportiert oder nach Bedarf gehandhabt werden kann.

Die Mittel zum Tragen sind so ausgebildet, daß sie auch eine Aufnahme der Armatur mittels eines Hebewerkzeuges erlauben. Sie sind dementsprechend so gestaltet, daß beispielsweise der Haken eines Kranes daran eingeklinkt oder die Gabel eines Staplers eingefahren werden kann.

Im Ergebnis führt eine Ausbildung der Armatur gemäß vorliegendem Vorschlag dazu, dass die manuell durchzuführenden Handgriffe erheblich erleichtert werden. Die Handhabung der Armaturen erfordert im Vergleich zu Ausführungen nach dem Stand der Technik einen erheblich geringeren Kraftaufwand und führt dementsprechend zu einer wesentlich geringeren körperlichen Belastung. Die Gefahr für Gesundheitsschäden infolge einer Überlastung von Wirbelsäule und Bandscheiben ist daher bei einer Armatur gemäß vorliegender Erfindung bedeutend geringer als bei bekannten Armaturen.

Die Mittel zum Tragen sind u-förmige, starr ausgebildete Tragegriffe, dessen Schenkelenden jeweils an genannten Lagern festgelegt sind. Dabei ist die Festlegung so ausgeführt, dass der Tragegriff über Gelenke mit den Lagerelementen verbunden und um die durch beide Anlenkpunkte laufende Achse verschwenkbar ausgebildet ist. Diese Art der Festlegung und der unterhalb der Anlenkpunkte liegende Schwerpunkt führen dazu, dass die Armatur am Griff hängend aufgenommen oder transportiert werden kann. Bei dieser Ausrichtung der Armatur fällt die körperliche Belastung vergleichsweise gering aus, während der Komfort beim Tragen vergleichsweise hoch anzusetzen ist.

Um bei der Handhabung der Armatur einen möglichst großen Komfort zu erzielen, ist gemäß einem Merkmal der Erfindung vorgesehen, dass die Anlenkpunkte in einer Ebene liegen, bezüglich der das Gehäuse Spiegelsymmetrie aufweist, oder die eine Gerade enthält, bezüglich der das Gehäuse Achsensymmetrie aufweist. Nimmt man zur Verdeutlichung dieses Sachverhalts an, dass die Armatur beispielsweise ein quaderförmiges Gehäuse mit einem Rechteck als Querschnitt habe, dann steht die die Anlenkpunkte enthaltende Ebene im ersten Fall senkrecht auf einer der Mittelachsen des Rechtecks, im zweiten Fall beispielsweise senkrecht auf einer von dessen Diagonalen. In beiden Fällen ist beim manuellen Tragen, Aufnehmen oder Absenken der Armatur ein hoher Komfort gewährleistet, wobei der Komfort im Fall eins ggf. noch etwas höher einzustufen ist, als der bei Fall zwei.

Für Armaturen, deren Gehäuse im wesentlichen zwar eine der genannten Symmetrieebenen aufweist, deren Schwerpunkt jedoch aufgrund von seitlichen Anbauten von weiteren Armaturkomponenten aus dieser Ebene herausgerückt ist, wird vorgeschlagen, die Anlenkpunkte in eine zu der genannten Symmetrieebene parallele Ebene durch den Schwerpunkt zu verlegen. Hierbei ist die parallele Ebene dadurch ausgezeichnet, dass sie die Armatur in zwei Teile gleichen Gewichts teilt. Aufgrund dieser Ausführung behält die Armatur beim Transport am vorgeschlagenen Tragegriff in vorteilhafter Weise eine Ausrichtung bei, in welcher die Symmetrieebene vertikal orientiert bleibt.

Zur Befestigung der genannten Lager sind prinzipiell mehrere konstruktive Maßnahmen möglich. Im Rahmen vorliegender Erfindung wird vorgeschlagen, die Festlegung der Lager entweder an am Gehäuse angeformten Stutzen oder an vorhandenen Befestigungsmitteln vorzunehmen. Die zweite Lösung empfiehlt sich insbesondere dann, wenn die vorhandenen Befestigungsmittel in einer der vorbenannten Ebenen liegen. In diesem Fall lassen sich die vorhandenen Schrauben dazu nutzen, das Mittel zum Tragen der Armatur in einer bevorzugten Position zu befestigen, welche durch die speziellen, oben genannten Eigenschaften der betreffenden Ebene gegeben sind.

Bei Fehlen derartiger vorhandener Befestigungsmittel sind am Gehäuse Stutzen anzuformen, die in eben diesen Ebenen liegen. Alternativ hierzu ist gemäß einem Merkmal der Erfindung auch vorgesehen, daß die Festlegung eines oder beider Lager an jeweils zwei der vorhandenen Befestigungsmittel erfolgt. Diese Art der Festlegung kommt beispielsweise dann in Betracht, wenn zwei vorhandene, benachbarte Befestigungsmittel außerhalb der oben definierten Ebenen liegen. Die Lager werden dann mittels brükkenartiger Elemente an zwei Befestigungsmitteln festgelegt. Dabei sind die an den Brücken ausgebildeten Anlenkpunkte zur Aufnahme des Mittels zum Tragen der Armatur jeweils in den oben genannten Ebenen angeordnet.

Grundsätzlich kann das Lager dadurch realisiert werden, dass eine Öse starr angeformt ist, an die das Mittel zum Tragen der Armatur angelenkt ist. Bei einer bevorzugten Ausführungsform der Armatur gemäß vorliegender Erfindung ist vorgesehen, daß die genannten Lager jeweils eine Öse mit angeformter Schraube oder mit angeformtem Gewindeloch aufweisen. Der die Schraube oder das Gewindeloch aufweisende Teil des Lagers dienen dann zur Befestigung des Lagers am Gehäuse, während an der angeformten Öse das Mittel zum Tragen der Armatur, beispielsweise der Haltegriff, angelenkt ist. Die Ausbildung des Lagers und des Befestigungselementes als ein Element führt in vorteilhafter Weise zu einer Verringerung der Zahl der Einzelteile der Armatur und damit auch zu einem verminderten Aufwand bei deren Herstellung.

Als besonders vorteilhafte Art der Befestigung der Ösen mit angeformter Schraube wird angesehen, die Öse durch eine Schraubverbindung an eine der Schrauben der Armatur festzulegen. Beispielsweise können Flanschschrauben der Armatur hierbei von Nutzen sein. Die Verbindung wird dadurch hergestellt, dass die Armaturschraube ein koaxiales Gewindeloch aufweist, das vom Schraubenkopf her zugänglich ist. Dann wird die Öse mit der angeformten Schraube genauer mit ihrem Schraubenschaft in dieses Gewindeloch eingedreht, wodurch die Öse ihre Befestigung erfährt. Es erübrigt sich dann an der Armatur selbst, Vorkehrungen zur Befestigung der Öse vorzusehen. Anstelle der Verwendung konventioneller Schrauben zur Herstellung der Flanschverbindung müssen dann lediglich entsprechend gestaltete Spezialschrauben verwendet werden. Weitere Maßnahmen bei der Herstellung erübrigen sich.

Weiter empfiehlt es sich, derartige Schraubenköpfe bzw. deren Gewindeloch durch einen Stöpsel zu verschließen. Bedenkt man, dass die großen und damit die schweren Armaturen aus rostendem Material bestehen und die Armaturen in feuchtes Erdreich eingebettet werden, entstehen aufgrund der Kontaktelektrizität zwischen verschiedenen Materialien, z. B. denen des Armaturengehäuses und dem der Schraube erhebliche Korosionsvorgänge.

Ein Stöpsel unterbindet den Zugang der Feuchtigkeit und bedeutet eine wesentliche Verbesserung.

Die Armaturen zur Steuerung von Wasser-, Abwasser-, Gas- oder Ölströmen sind in der Regel harten Umweltbedingungen ausgesetzt. Von Vorteil ist es daher, wenn das Mittel zum Tragen der Armatur und/oder dessen Lager aus einem gegen Umwelteinflüsse beständigem Material ausgebildet ist. Die Erfindung sieht dementsprechende Ausführungen vor, wobei eine Ausbildung aus rostfreiem Stahl bevorzugt wird.

Armaturen werden häufig unterirdisch verlegt und von der Erdoberfläche aus betätigt. Zu diesem Zwecke dient eine Stange, die ausgehend von der Armatur und im Bereich der Oberfläche durch eine Kappe geschützt endet. Um das Erdreich von dieser Stange abzuhalten wird auf die Armatur eine Glocke aufgesetzt, die in ein bis an die Oberfläche geführtes Hülsrohr übergeht. In einer zweckmäßigen Weiterbildung der Erfindung ist vorgesehen, die Mittel zum Tragen der Armatur, derart zu bemessen, daß sie in im wesentlichen nach oben ausgerichtete Position der Festlegung der Glocke dienen. Zu diesem Zwecke liegen die Mittel zum Tragen der Armatur zumindest in einem Punkt an der Glocke an und bewirken hierdurch die Fixierung.

Weitere Einzelheiten, Merkmale und Vorteile der Erfindung lassen sich dem nachfolgenden Teil der Beschreibung entnehmen. In diesem Teil wird ein Ausführungsbeispiel der erfindungsgemäßen Armatur anhand einer Zeichnung näher erläutert.

Die Figur zeigt eine Außenansicht der Armatur.

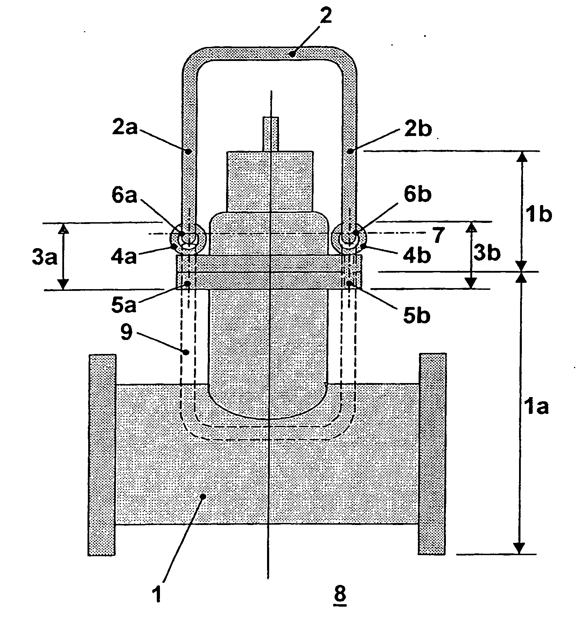

Bei der in Figur 1 dargestellten Armatur handelt es sich um einen Schieber, der in Wasser- oder Abwasserleitungen eingebaut wird und mittels dessen der Durchfluß durch die Leitung reduziert bzw. abgestellt werden kann. Der Schieber weist ein Gehäuse 1 auf, das im vorliegenden Fall aus zwei mit einander verschraubten Teilen 1a und 1b besteht. Der Schieber ist mit einem u-förmigen Tragegriff 2 ausgestattet, dessen Schenkel 2a, 2b an den Lagern 3a, 3b angelenkt sind. Wie der Zeichnung zu entnehmen ist, weisen die Lager 3a, 3b jeweils eine Öse 4a, 4b mit angeformter Schraube 5a, 5b auf. Dabei dient der als Schraube 5 ausgebildete Teil des Lagers 3 zur Befestigung des Lagers am Gehäuse 1, während an der Öse 4 der Tragegriff 2 angelenkt ist.

Die Ausbildung des Tragegriffs 2 erlaubt ein Verschwenken des Griffs um eine durch beide Anlenkpunkte 6a und 6b laufende Achse 7. Beide
Anlenkpunkte liegen in einer Ebene 8 des Gehäuses 1, zu der das Gehäuse spiegelsymmetrisch ausgebildet ist. Bei vorliegender Figur deckt sich diese Symmetrieebene 8 mit der Zeichenebene. Durch diese Ausbildung ist beim manuellen Tragen, Aufnehmen oder Absenken der Armatur eine hoher Komfort gewährleistet. Die Ausführung des Griffs 2 gemäß Figur 1 gestattet daneben auch eine Aufnahme der Armatur mittels eines Hebewerkzeuges. Nach Abschluß des Handhabungsvorgangs kann der Tragegriff 2 in eine Ruheposition 9 verschwenkt werden, in welcher er auf den Betrieb der Armatur keine störenden Auswirkungen hat.

## Patentansprüche

1. Rohrleitungsarmatur, mit
- einem Gehäuse (1a, 1b), und
- Armatur-Komponenten, die mit Hilfe von schraubbaren Befestigungsmitteln (4a, 4b) am Gehäuse befestigt sind, wobei
- als Armatur-Komponente ein Mittel (2) zum Tragen der Rohrleitungsarmatur vorgesehen ist,
- das an wenigstens zwei am Gehäuse (1) befestigten Lagern (3a, 3b) bleibend festgelegt ist, wobei
- die Festlegungspunkte (6a, 6b) oberhalb des Schwerpunktes der Armatur liegen,
**dadurch gekennzeichnet, daß**
- das genannte Mittel (2) einen U-förmigen, starr ausgebildeten Tragegriff (2) umfaßt, dessen Schenkelenden (2a, 2b)
- jeweils an genannten Lagern (3a, 3b) angelenkt sind, und
- um eine durch die Anlenkpunkte (6a, 6b) laufende Achse (7) schwenkbar ausgebildet sind, wobei
- die Achse (7) in Achsrichtung des Rohres verläuft.

2. Rohrleitungsarmatur nach Anspruch 1, **dadurch gekennzeichnet, daß** es sich um eine Rohrleitungsarmatur für Wasser-, Gas-, Abwasser- oder Ölleitungen handelt.

3. Armatur nach einem der Ansprüche 1 - 2, **dadurch gekennzeichnet, dass**
- die Anlenkpunkte (6a, 6b)
- in einer Ebene (8) liegen,
- bezüglich der das Gehäuse (1) Spiegelsymmetrie aufweist,
- oder die eine Gerade enthält, bezüglich der das Gehäuse Achsensymmetrie aufweist,
- oder in einer zu den genannten Ebenen parallelen Ebene durch den Schwerpunkt liegen.

4. Armatur nach einem der Ansprüche 1 - 3, **dadurch gekennzeichnet, dass**
- die Befestigung der genannten Lager (3a, 3b)
- an am Gehäuse angeformten Stutzen
- oder an vorhandenen Befestigungsmitteln erfolgt.

5. Armatur nach Anspruch 4, **dadurch gekennzeichnet, dass**
- die Befestigung wenigstens eines der genannten Lager (3a, 3b) an jeweils zwei der vorhandenen Befestigungsmitteln erfolgt.

6. Armatur nach einem der Ansprüche 1 - 5, **dadurch gekennzeichnet, dass**
- die genannten Lager (3a, 3b) jeweils eine Öse (4a, 4b)
- mit angeformter Schraube (5a, 5b)
- oder mit angeformten Gewindeloch aufweisen.

7. Armatur nach Anspruch 6, **dadurch gekennzeichnet**, das eine Schraube der Armatur ein vom Schraubenknopf her zugängliches koaxiales Gewindeloch aufweist, in das die mit der Öse (4a, 4b) verbundene Schraube (5a, 5b) einschraubbar ist.

8. Armatur nach Anspruch 7, **dadurch gekennzeichnet, dass** Schraubenkopf und/oder Gewindeloch durch einen Stöpsel verschließbar sind.

9. Armatur nach einem der Ansprüche 1 - 8, **dadurch gekennzeichnet, dass**
- das genannte Mittel (2) und/oder dessen Lager (3a, 3b) aus einem gegen Umwelteinflüsse beständigem Material, vorzugsweise rostfreiem Stahl, ausgebildet sind.

10. Armatur nach einem der vorhergehenden Ansprüche, **dadurch gekennzeichnet, dass**
- die Mittel zum Tragen der Armatur derart bemessen sind, dass sie in nach oben ausgerichteter Position eine auf die Kopf der Armatur-Komponente aufbringbare Glocke im wesentlichen von oben erfasst und hierdurch festlegt.

## Claims

1. Pipeline fitting comprising
- a housing (1a, 1b), and
- fitting components, which are fastened to the housing by means of screwable fastening means (4a, 4b),
- a means (2) of carrying the pipeline fitting being provided as a component of the fitting,
- said means being permanently fixed on at least two bearings (3a, 3b), which are fastened on the housing (1), the fixing points (6a, 6b) lying above the centre of gravity of the fitting,
**characterised in that**
- the said means (2) comprises a U-shaped, rigidly designed carrying handle (2), of which the leg ends (2a, 2b)
- a re in each case connected in an articulated manner to the aforementioned bearings (3a, 3b), and
- are mounted so as to be pivotable about an axis (7), which runs through the articulation points (6a, 6b)
- the axis (7) extending in the axial direction of the pipe.

2. Pipeline fitting according to claim 1, **characterised in that** it concerns a pipeline fitting for water, gas, sewage or oil pipelines.

3. Fitting according to one of claims 1-2, **characterised in that**
- the articulation points (6a, 6b)
- lie in one plane (8),
- possess mirror symmetry with respect to the housing (1),
- or include a straight line with respect to which the housing possesses axial symmetry,
- or lie in a plane that is parallel to the aforesaid planes and passes through the centre of gravity.

4. Fitting according to one of claims 1-3, **characterised in that**
- the fastening of the aforementioned bearings (3a, 3b) takes place
- to connecting pieces that are integrally formed on the housing
- or to existing means of fastening

5. Fitting according to claim 4, **characterised in that**
- the fastening of at least one of the aforementioned bearings (3a, 3b) takes place to two of the existing means of fastening in each case.

6. Fitting according to one of claims 1-5, **characterised in that**
- the aforementioned bearings (3a, 3b) comprise at least one ring (4a, 4b) in each case
- having a screw (5a, 5b) formed integrally thereon
- or having an integrally formed threaded hole.

7. Fitting according to claim 6, **characterised in that** a screw of the fitting comprises a coaxial threaded hole, which is accessible from the screw head, into which the screw (5a, 5b) that is connected to the ring (4a, 4b) can be screwed.

8. Fitting according to claim 7, **characterised in that** the screw head and/or threaded hole are sealable by means of a plug.

9. Fitting according to one of claims 1-8, **characterised in that**
- the aforementioned means (2) and/or the bearings (3a, 3b) thereof are made from a material that is resistant to environmental influences, preferably from stainless steel.

10. Fitting according to one of the preceding claims, **characterised in that** the means for carrying the fitting are dimensioned such that, when they are in a upwardly directed position, a bell which can be applied to the head of the fitting component essentially encloses them from above and thereby fixes them.

## Revendications

1. Robinet de tuyauteries, comprenant
- un boîtier (1a, 1b), et
- des composantes de robinetterie fixables sur le boîtier à l'aide de moyens de fixation par vis (4a, 4b),
- en tant que composante de robinetterie étant prévu un moyen (2) de support du robinet de tuyauteries,
- étant localisé de manière permanente sur au moins deux paliers (3a, 3b) fixés sur le boîtier (1),
- les points de localisation (6a, 6b) se trouvant au-dessus du centre de gravité du robinet,
**caractérisé par le fait que**
- le moyen précité (2) comprend une poignée de barre (2) en U réalisée de façon rigide dont
les extrémités de branche (2a, 2b)
- sont articulées sur des paliers (3a, 3b) précités et
- réalisées de manière pivotante autour d'un axe (7) traversant les points d'articulation (6a, 6b),
- l'axe (7) allant dans la direction de l'axe du tuyau.

2. Robinet de tuyauteries selon la revendication 1, **caractérisé par le fait qu'**il s'agit d'un robinet de tuyauterie prévu pour des canalisations d'eau, de gaz, d'évacuation ou d'huile.

3. Robinet selon l'une quelconque des revendications 1 à 2,
**caractérisé par le fait que**
- les points d'articulation (6a, 6b)
- se situent dans un plan (8)
- par rapport auquel le boîtier (1) est symétrique,
- ou qui contient une ligne droite par rapport à laquelle l'axe du boîtier est symétrique,
- ou se situent dans un plan parallèle aux plans précités passant par le centre de gravité.

4. Robinet selon l'une quelconque des revendications 1 à 3,
**caractérisé par le fait que**
- la fixation des paliers précités (3a, 3b) est effectuée
- sur des tubulures formées sur le boîtier
- ou sur des moyens de fixation existants.

5. Robinet selon la revendication 4,
**caractérisé par le fait que**
- la fixation d'au moins un des paliers (3a, 3b) précités est effectuée chaque fois sur deux des moyens de fixation existants.

6. Robinet selon l'une quelconque des revendications 1 à 5,
**caractérisé par le fait que**
- les paliers précités (3a, 3b) présentent chacun un oeillet (4a, 4b)
- comportant une vis (5a, 5b) ménagée sur ce dernier
- ou un orifice taraudé ménagé sur ce dernier.

7. Robinet selon la revendication 6,
**caractérisé par le fait qu'**une vis du robinet comprend un orifice taraudé coaxial accessible à partir de la tête de vis dans lequel la vis (5a, 5b) associée à l'oeillet (4a, 4b) peut être vissée.

8. Robinet selon la revendication 7,**caractérisé par le fait que** la tête de vis et/ou l'orifice taraudé est obturable par un bouchon.

9. Robinet selon l'une quelconque des revendications 1 à 8,
**caractérisé par le fait que**
- le moyen (2) précité et/ou son palier (3a, 3b) est conçu en un matériau résistant aux influences de l'environnement, de préférence en acier inoxydable.

10. Robinet selon l'une quelconque des revendications précédentes,
**caractérisé par le fait que**
- les moyens de support du robinet sont réalisés de manière que, dans une position orientée vers le haut, ils déterminent une calotte pouvant être appliquée sur la tête de la composante de robinetterie en la saisissant.
